# EUROPEAN PATENT SPECIFICATION

(11) **EP 2 998 553 B1**
(45) Date of publication and mention of the grant of the patent: **30.05.2018**
(21) Application number: 14185221.0
(22) Date of filing: 17.09.2014
(51) Int. Cl.: F02D 41/10, F01L 13/00, F02D 13/02, F02D 41/00

(54) **INTERNAL COMBUSTION ENGINE AND ASSOCIATED OPERATING METHOD**
BRENNKRAFTMASCHINE UND ZUGEHÖRIGES BETRIEBSVERFAHREN
MOTEUR À COMBUSTION INTERNE ET PROCÉDÉ DE FONCTIONNEMENT ASSOCIÉ

(43) Date of publication of application: 23.03.2016
(73) Proprietor: Caterpillar Motoren GmbH & Co. KG, 24159 Kiel (DE)
(72) Inventor: Sixel, Eike Joachim, 24109 Kiel (DE); Schmidt, Andre, 18147 Rostock (DE); Marscheider, Hannes, 24790 Schülldorf (DE); Wester, Daniel, 24242 Felde (DE)
(74) Representative: BRP Renaud & Partner mbB Rechtsanwälte Patentanwälte Steuerberater

(56) References cited:
- EP-A1- 2 677 142
- WO-A1-2012/087421
- JP-A- 2006 002 608
- US-A- 2 670 595
- US-A1- 2014 026 873
- US-A1- 2014 224 200

## Description

### Technical Field

The present disclosure generally relates to a combustion engine and a method of operating the same. In particular, but not exclusively, large internal combustion engines configured to burn gaseous fuel as used, for example, on ships, in power plants, or with heavy vehicles and construction vehicles may be configured and controlled according to the present disclosure. The present disclosure generally relates to, for example, Otto gas engines, spark ignited open chamber or pre-chamber, Diesel gas engines, micro pilot ignited open chamber or pre-chamber, and dual fuel type engines with one or two Diesel injection systems.

### Background

Various technologies for adjusting the opening and closing of inlet valves and outlet valves of combustion engines are known. For example, EP 2 136 054 A1 shows a device for controlling the operation of a diesel engine equipped with a rotatable shaft provided with three eccentrics. Each eccentric supports an operating lever. A first eccentric supports an inlet valve operating lever formed, for example, as an oscillating arm, which may trace a stroke of an inlet cam via, for example, a roll supported thereon, and may transmit it to the inlet valve via, for example, an inlet valve operating lifter in order to operate the inlet valve. In a similar manner, a second eccentric supports an outlet valve operating lever, which may trace the stroke of an outlet cam via, for example, a roll supported thereon, and transmit it to an outlet valve operating lifter. A stroke of a fuel pump cam may be traced, for example, by a roll arranged at the end of a pump operating lever and transmitted to a pump piston via, for example, a pressure spring. The pump operating lever is supported on the third eccentric. The eccentrics may be formed integrally with the rotatable shaft. The eccentricities of the preferably circular cylindrical circumferential surfaces of the eccentrics relative to the axis of the rotatable shaft, as well as the relative position of the eccentricities relative to the rotational position of the shaft may be selected individually according to the respective requirements. An actuator and gear wheels form an actuator unit. At stationary operation, the diesel engine is operated at a load greater than 25% of the full load in a Miller cycle. At loads below 25% of the full load, the shaft is turned, so that the diesel engine is operated with two different valve lifting curves. This technology is known as flexible camshaft technology (FCT).

EP 2 752 571 A1 discloses a dual fuel engine using FCT with two shaft positions, one in a high load liquid fuel mode and another one in a low load liquid fuel mode and a gaseous fuel mode.

EP 2 677 142 A1 discloses a method and device for controlling the operation of a dual fuel engine operable in a low load diesel fuel mode, a high load diesel fuel mode and a gas fuel mode. Three different rotational angles of a shaft result in different opening and closing timings of inlet and outlet valves, and an adjusted injection of diesel fuel.

WO 2012 087421 A1 discloses an internal combustion engine having at least one intake valve configured to selectively fluidly connect an intake plenum with a combustion chamber of the internal combustion engine. At least one intake valve is configured to selectively fluidly connect the intake plenum with the combustion chamber.

US 2014/0224200 A1 discloses a control system for a gaseous fuel engine having an intake valve mechanically driven by a camshaft. A control system has a variable valve timing device configured to adjust a cyclical opening and closing timing of the intake valve. A controller is configured to selectively initiate a first Miller Cycle timing and a second Miller Cycle timing based on a signal indicative of a speed of the engine.

The present disclosure is directed, at least in part, to improving or overcoming one or more aspects of prior systems

### Summary of the Disclosure

In one aspect of the present disclosure, a combustion engine operable in at least a first gaseous fuel mode and a second gaseous fuel mode comprises at least one cylinder, an inlet valve configured to supply the at least one cylinder with intake air, an outlet valve configured to discharge exhaust from the at least one cylinder, and a control device configured to adjust at least an inlet valve closing timing of the inlet valve. The control device is configured to adjust the inlet valve closing timing to a first inlet valve closing timing in the first gaseous fuel mode, and to a second inlet valve closing timing in the second gaseous fuel mode, the second inlet valve closing timing being earlier than the first inlet valve closing timing. The first gaseous fuel mode is a medium load gaseous fuel mode, and the second gaseous fuel mode is a high load gaseous fuel mode. The control device is configured to switch from the first inlet valve closing timing to the second inlet valve closing timing when an engine load exceeds a predetermined first load threshold of between 50% and 99%, for example, between 70% and 90%, in particular, 80%, of the full engine load.

In another aspect of the present disclosure, a method of operating a gaseous fuel combustion engine comprising at least one cylinder having an inlet valve configured to supply the at least one cylinder with intake air and an outlet valve configured to discharge exhaust from the at least one cylinder comprises operating the combustion engine in a first gaseous fuel mode with a first inlet valve closing timing, switching from the first inlet valve closing timing to a second inlet valve closing timing earlier than the first inlet valve closing timing, and operating the combustion engine in a second gaseous fuel mode with the second inlet valve closing timing. The first gaseous fuel mode is a medium load gaseous fuel mode, and the second gaseous fuel mode is a high load gaseous fuel mode. The method further comprises switching from the first inlet valve closing timing to the second inlet valve closing timing when an engine load exceeds a predetermined first load threshold of between 50% and 99%, for example, between 70% and 90%, in particular, 80%, of the full engine load.

It has to be noted that the terms "gas fuel mode", "gas mode" and "gaseous fuel mode" may be used herein for the same kind of operating mode of a combustion engine. All these terms may refer to the kind of operating mode of the combustion engine in which the combustion engine burns gaseous fuel such as, for example, gas of any gas quality, particularly natural gas, but also non-pipeline quality gas as associated with gas in oil fields.

It is to be understood that any reference to an inlet valve, an outlet valve or a fuel pump does not limit the present disclosure to one single valve or pump. To the contrary, one or more inlet and outlet valves or one or more fuel injection pumps may be provided for each cylinder.

According to the present disclosure, "late" may mean inter alia the inlet valve opening begins later than the inlet valve opening in a high load gaseous fuel mode. "Early" may mean inter alia the inlet valve closes earlier than in a medium load gaseous fuel mode.

Furthermore, it is to be understood that both the foregoing general description and the following detailed description are exemplary and explanatory only and are not limiting the disclosure. Other features and aspects of this disclosure will be apparent to the skilled person based upon the following description, the accompanying drawings and the attached claims.

### Brief Description of the Drawings

The accompanying drawings, which are incorporated herein and constitute a part of the specification, illustrate exemplary embodiments of the disclosure and, together with the description, serve to explain the principles of the disclosure. In the drawings:
Fig. 1 shows a schematic diagram of a control device for controlling the operation of a combustion engine according to the present disclosure;
Fig. 2 shows a schematic diagram of an injection system that may be utilized for implementing the method according to the present disclosure;
Fig. 3 shows a table representing exemplary valve timings and injection timings according to the present disclosure; and
Fig. 4 shows exemplary inlet valve curves and outlet valve curves according to a medium load gaseous fuel mode and a high load gaseous fuel mode.

### Detailed Description

The present disclosure may be based in part on the realization that a gas or dual fuel engine operating in a gaseous fuel mode can be optimized by using different valve timings in the gaseous fuel mode. In particular, the present disclosure may be based in part on the realization that at high loads a strong Miller cycle is required to run the gas or dual fuel engine with a sufficient knock margin, while at the same time taking advantage of the high compression ratio and the high BMEP to achieve a high efficiency. In the normal operation region, for example, at medium loads of approximately 25% to 80%, less Miller is required to run the engine with the highest possible efficiency.

Further, the present disclosure may be based in part on the realization that at very low loads a strong Miller cycle can be used as kind of a throttle, such that the engine will get less air and will be able to run stable at lower loads.

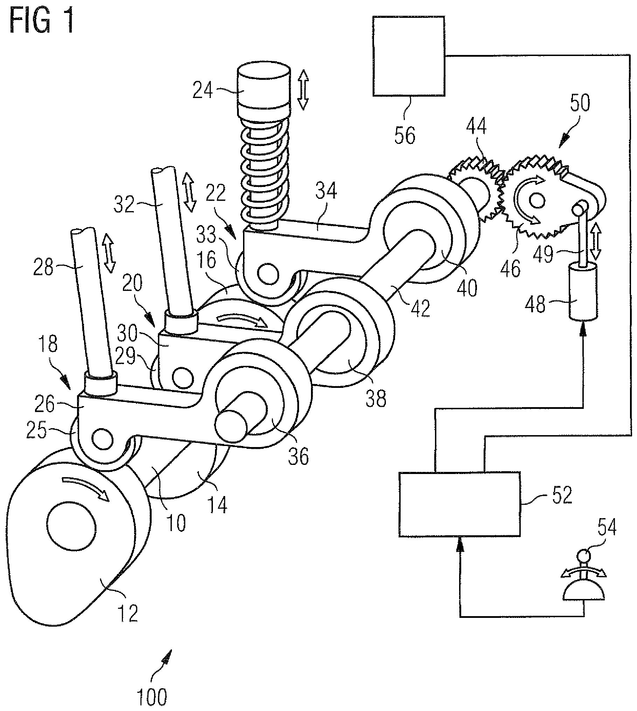

According to Fig. 1, a not illustrated internal combustion engine is provided and includes a camshaft 10 which is preferably formed integrally with, for example, several cams, for example, an inlet cam 12, an outlet cam 14 and a pump cam 16. In the exemplary embodiment describe in the following, the internal combustion engine is a dual fuel engine configured to operate with diesel fuel as one example for a liquid fuel in a low load diesel fuel mode and a high load diesel fuel mode, and on gas in a plurality of gaseous fuel modes, which will be described in more detail in the following. It should be appreciated, however, that in other embodiments in accordance with the present disclosure the internal combustion engine may be a gas engine, for example, an Otto gas engine, operable in a plurality of gaseous fuel modes.

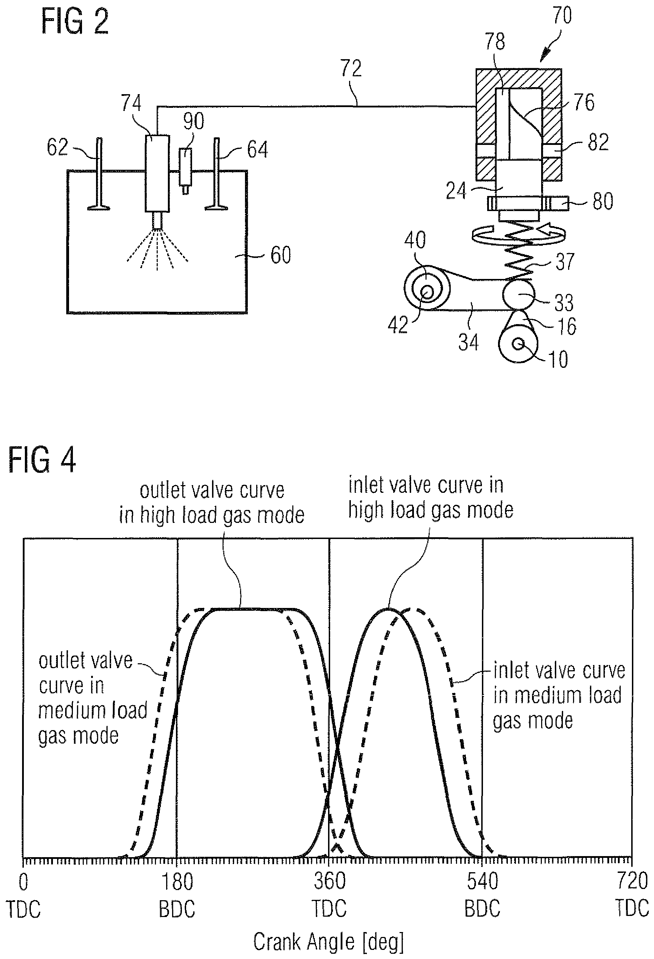

Inlet cam 12 is adapted to operate an inlet valve 62 that is arranged in an inlet of a combustion chamber of a cylinder 60 of the dual fuel engine (see Fig. 2) and operated via, for example, an inlet valve operating arrangement 18. Outlet cam 14 is adapted to operate an outlet valve 64 arranged in an outlet of a combustion chamber of cylinder 60 via, for example, an outlet valve operating arrangement 20. Pump cam 16 is adapted to operate a pump piston 24 arranged in an injection pump via, for example, a pump operating arrangement 22.

Fig. 1 shows an exemplary embodiment of a control device 100 for controlling a timing of inlet valve 62, outlet valve 64 and pump piston 24.

Inlet valve operating arrangement 18 comprises an inlet valve operating lever 26 formed, for example, as an oscillating arm, which is adapted to trace the stroke of inlet cam 12 via, for example, a roll 25 supported thereon, and transmit the same to inlet valve 62 via, for example, an inlet valve operating lifter 28 in order to operate inlet valve 62.

In a similar manner, outlet valve operating arrangement 20 is provided with an outlet valve operating lever 30, which is adapted to trace the stroke of outlet cam 14 via, for example, a roll 29 supported thereon and transmit the same to an outlet valve operating lifter 32.

The stroke of pump cam 16 may be traced by, for example, a roll 33 arranged at the end of a pump operating lever 34 and may be transmitted to pump piston 24.

At the ends facing away from tracing rolls 25, 29, 33, operating levers 26, 30 and 34 are supported on eccentric disks 36, 38 and 40, which are preferably formed integrally with a rotatable shaft 42 that may be supported on an engine housing (not shown). The eccentricities of the preferably circular cylindrical circumferential surfaces of eccentric disks 36, 38, 40 relative to the axis of shaft 42, as well as the relative positions of the eccentricities relative to the rotational position of shaft 42 may be selected individually according to the respective requirements outlined herein.

In order to adjust the rotational position of shaft 42, shaft 42 may be connected, for example, torsionally stiff, to a gearwheel 44 or any other applicable element meshing with, for example, teeth of a segmental gearwheel 46, whose rotational position may be adjustable via, for example, an actuator 48 including an actuator rod 49. Actuator 48 together with segmental gearwheel 46 and gearwheel 44 may form an actuator unit 50. A hydraulic or pneumatic cylinder may be used as a longitudinally adjustable element. In other embodiments, a linear motor or any other suitable element may be adapted to rotate shaft 42 in an appropriate manner.

A control unit 52 is provided for controlling actuator 48. Control unit 52 preferably comprises a microprocessor with appropriate program and data memories and includes several outputs, at least one of said outputs being connected to actuator 48. At least one other output of control unit 52 is connected to a pilot injection system 56 of the dual fuel engine. Pilot injection system 56 may be any know pilot injection system, for example, a common rail pilot injection system, and may be configured to provide a pilot injection of diesel fuel at a timing commanded by control unit 52. In particular, pilot injection system 56 may include an injector and may be configured to perform a pilot injection of diesel fuel in each operating mode of the dual fuel engine.

Control unit 52 is preferably provided with several inputs, one of said inputs being connected with, for example, an operating element 54 for adjusting, for example, the load of the dual fuel engine or the operating mode of the same.

Fig. 2 schematically shows some details of the injection system for cylinder 60, inlet valve 62 and outlet valve 64 of the dual fuel engine. It should be appreciated that any number of cylinders having the same configuration may be included in the dual fuel engine, in any known cylinder configuration, and that any number of cylinders may be associated with a single shaft 42. In other embodiments, each cylinder may be provided with a separate control device including a separate shaft 42.

Inlet valve 62 is configured to supply a mixture of intake air to cylinder 60 for combustion. For example, a gas admission valve may be arranged in an intake passage (not shown) upstream of inlet valve 62 and may be controlled, for example, by control unit 52, to supply gaseous fuel to the compressed air in the intake passage. It should be appreciated that in other embodiments the mixture of gaseous fuel and air may be produced in a different manner, for example, using a mixer disposed further upstream of intake valve 62. In other embodiments, gaseous fuel may be supplied to cylinder 60 not by intake valve 62, but by a separate gas valve.

As shown in Fig. 2, an injection pump 70 is connected to an injection nozzle 74 via a pressure line 72. Injection pump 70 is configured to perform a main injection of diesel fuel in the high load diesel fuel mode and the low load diesel fuel mode of the dual fuel combustion engine. Further, a pilot injector 90 is provided as part of pilot injection system 56 to perform a pilot injection of diesel fuel into the combustion chamber of cylinder 60 in any one of the operating modes of the dual fuel engine. In some embodiments, pilot injector may be configured to receive pressurized diesel fuel from a common rail (not shown) of pilot injection system 56. Further, in some embodiments, pump piston 24 may be provided with a control edge 76 and a longitudinal groove 78. For adjusting the supply rate, pump piston 24 may be turned around an axis parallel to its linear reciprocating movement via, e.g., a control rod 80. Supply bores 82 may be provided to a supply space of injection pump 70. As shown in Fig. 2, the point of time at which pump piston 24 may close supply bores 82 during its upward stroke can be adjusted by, e.g., rotating eccentric disk 40, such that the position of tracing roll 33, which is supported on the end of pump operating lever 34, is displaced, e.g., along an approximately horizontal line in Fig. 2. It should be appreciated that, in other exemplary embodiments, injection pump 70 may have a different configuration than the one shown in Fig. 2.

As shown in Fig. 2, when camshaft 10 rotates clockwise, pump operating lever 34 is pivoted upwards when roll 33 is contacted by pump cam 16. When shaft 42 is turned, for example, counter clockwise in Fig. 2, pump operating lever 34 is displaced to the left in Fig. 2, and the timing when roll 33 is contacted by pump cam 16 is changed, resulting in a diesel main injection with a different timing.

It is obvious from Fig. 1 that the same principle applies to the operation of inlet valve 62 and outlet valve 64. In other words, the timings of the inlet valve opening and closing and the outlet valve opening and closing may be adjusted by rotation of shaft 42. In particular, shaft 42 may be rotated between a first position associated with the low load diesel fuel mode and a medium load gaseous fuel mode, and a second position associated with the high load diesel fuel mode, a high load gaseous fuel mode and, optionally, a low load gaseous fuel mode.

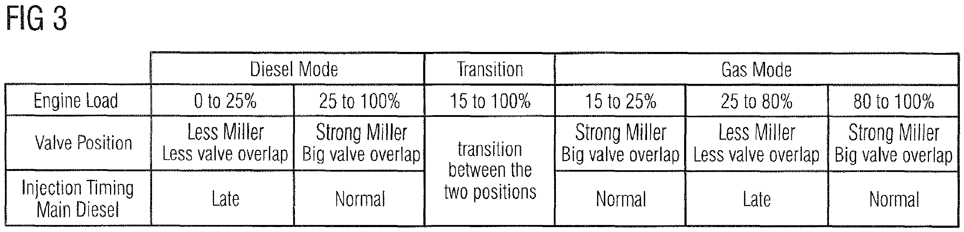

Fig. 3 shows exemplary configurations for the timings of the inlet valves and the outlet valves, respectively, as well as for the timing, i.e., the start, of the diesel main injection in the different operating modes of the dual fuel engine. By means of the eccentricities of the three eccentric disks 36, 38, 40 (see Fig. 1), the rotational positions of disks 36, 38, 40 on shaft 42, i.e., the opening and/or closing of the inlet valves and the outlet valves and the start of a main injection of diesel fuel may be controlled in an appropriate manner. The timing of the pilot injection may be controlled by control unit 52 independent of the position of shaft 42. Fig. 4 shows exemplary inlet valve curves and outlet valve curves for the medium load gaseous fuel mode (the low load liquid fuel mode) and the high load gaseous fuel mode (the high load liquid fuel mode), respectively, in accordance with the present disclosure.

As shown in Fig. 3, in some exemplary embodiments of the present disclosure, the timing of the diesel main injection is late in the low load diesel fuel mode when compared to the high load diesel fuel mode, for example, at 5° BTDC, wherein BTDC means Before Top Dead Center. It should be appreciated, however, that in other embodiments the timing of the diesel main injection may be the same in the low load diesel fuel mode and the high load diesel fuel mode, if appropriate. For example, this may be achieved by the eccentricity of eccentric 40 being zero, i.e., the center of disk 40 coinciding with the center of shaft 42. Further, it will be appreciated that no diesel main injection is performed in the three gaseous fuel modes.

In addition, as shown in Fig. 4, the inlet valve closes earlier in the high load gaseous fuel mode (the high load liquid fuel mode) than in the medium load gaseous fuel mode (the low load liquid fuel mode). This results in a stronger Miller cycle in the high load gaseous fuel mode, allowing for an increased knock margin and a high efficiency at high loads when the engine is operating in the gaseous fuel mode. In the exemplary embodiment using FCT, the inlet valve also opens earlier in the high load gaseous fuel mode than in the medium load gaseous fuel mode. Further, the outlet valve curve is also shifted due to the FCT configuration. It should be appreciated, however, that in other embodiments the timings of the inlet valve and the outlet valve may be controlled separately and/or independently. For example, only the inlet valve closing timing could be changed when switching between the medium load gaseous fuel mode and the high load gaseous fuel mode.

The valve lifting curves and the main injection timing are shifted by rotation of the appropriately configured shaft 42. For example, control unit 52 (Fig. 1) may be connected to a load sensor (not shown) and receive an engine load as an input. Control unit 52 may further be configured to rotate shaft 42 to switch the valve timing when the engine load exceeds a first predetermined load threshold, for example, around 50% to around 99%, or around 70% to around 90%, in particular, around 80% of the full engine load. In other embodiments without FCT shaft 42, control unit 52 may be configured to operate a different actuating device in order to switch the valve timing in an appropriate manner.

In some embodiments, control device 100, for example, control unit 52, may be configured to rotate shaft 42 to switch the valve timing when the engine load falls below a second predetermined load threshold, for example, around 1% to around 30%, or around 20% to around 30%, in particular, around 20%, to operate the engine in a low load gaseous fuel mode. In some embodiments, the valve timing may be the same in the low load gaseous fuel mode and the high load gaseous fuel mode. It will be appreciated, however, that in other embodiments the timings may be different. Nevertheless, control device 100 may be configured to at least adjust the inlet valve closing timing such that it is earlier in the low load gaseous fuel mode than in the medium load gaseous fuel mode.

In the exemplary embodiment described herein, shaft 42 is configured to be rotated between two positions, one corresponding to the high load gaseous fuel mode and the low load gaseous fuel mode (and the high load diesel fuel mode) and one corresponding to the medium load gaseous fuel mode (and the low load diesel fuel mode). In other words, the valve lifting curves are the same in the high load gaseous fuel mode and in the low load gaseous fuel mode. It should be appreciated, however, that in other embodiments more than two positions of shaft 42 may be provided. For example, different valve timings could be provided for the low load gaseous fuel mode and the high load gaseous fuel mode by using an appropriate configuration of shaft 42 and actuator unit 50. It also should be appreciated that in other embodiments an independent shifting of the three levers with more than two positions may be provided.

To compensate for the relatively late diesel main injection in the low load diesel fuel mode, an early pilot injection is performed, for example, at 20° BTDC. Similarly, a pilot injection may be performed in the gas mode. The pilot injection in the gas mode may be performed at a different timing than in the low load diesel fuel mode. In some embodiments, different amounts of pilot fuel may be injected in the gas mode and in the low load diesel fuel mode. For example, in the low load diesel fuel mode, pilot injection system 56 may be controlled to inject pilot fuel at the maximum capacity of pilot injector 90 to aid the combustion process in cylinder 60. In the gas mode, less pilot fuel may be injected by pilot injection system 56.

It should be appreciated that the timings for the diesel fuel main injection and the diesel fuel pilot injection given in Fig. 3 are only exemplary and may be modified within certain boundaries. For example, the pilot injection in the low load diesel fuel mode may be performed at between 35° BTDC to 0° BTDC, the main injection in the low load diesel fuel mode may be performed at between 20° BTDC to 0° BTDC, and the main injection in the high load diesel fuel mode may be performed at between 25° BTDC to 0° BTDC.

Similarly, it should be appreciated that the valve lifting curves shown in Fig. 4 are only exemplary. In other embodiments according to the present disclosure, shaft 42 may be configured to result in different valve timings in the corresponding operating modes of the gas or dual fuel engine. For example, an inlet valve opening in the low load diesel fuel mode and the medium load gaseous fuel mode may be at 35° +/- 60° BTDC, particularly, 35° +/- 10° BTDC, and an inlet valve closing may be at 10° +/- 60° BBDC, particularly, 10° +/- 10° BBDC, wherein BBDC means Before Bottom Dead Center. Further, an outlet valve opening in the low load diesel fuel mode and the medium load gaseous fuel mode may be at 50° +/- 60° BBDC, particularly 50° +/- 10° BBDC, and an outlet valve closing may be at 35° +/- 60° ATDC, particularly 35° +/- 10° ATDC, wherein ATDC means After Top Dead Center. Likewise, in the high load gaseous fuel mode, an inlet valve opening may be at 45° +/- 60° BTDC, particularly 45° +/- 10° BTDC, and an inlet valve closing may be at 20° +/- 60° BBDC, particularly 20° +/- 10° BBDC. Further, an outlet valve opening in the high load gaseous fuel mode may be at 40° +/- 60° BBDC, particularly 40° +/- 10° BBDC, and an outlet valve closing may be at 45° +/- 60° ATDC, particularly 45° +/- 10° ATDC.

Although a dual fuel engine has been described as an exemplary embodiment, the present disclosure may also be used for gas engines, for example, spark-ignited gas engines. For example, a control device similar to control device 100 shown in Fig. 1 could be used, with pump operating arrangement 22 being omitted. In other embodiments, different control devices may be used for adjusting an opening/closing of inlet vale 62 and/or outlet valve 64. For example, any known control device operable to adjust the timing of at least closing of inlet valve 62 could be used to implement the teachings of the present disclosure.

In some exemplary embodiments of the present disclosure, the low load range, the medium load range and the high load range may represent the total load range of the dual fuel engine. In an exemplary embodiment of the present disclosure, the low load range may be defined as 0% to 25% of nominal load, the medium load range may be defined as 25% to 80% of nominal load, and the high load range may be defined as 80% to 110% of nominal load.

### Industrial Applicability

In order to realize the method according to the disclosure, advantageously the following operating parameters are chosen:

At stationary operation, the dual fuel engine is operated at a load greater than 25% of the full load, i.e., with a first angle position (medium load gaseous fuel mode angle position) of shaft 42, for example, in the medium load gaseous fuel mode, with the valve lifting curves shown as dashed lines in Fig. 4.

At loads above 80% of the full load, shaft 42 is turned to a second angle position (high load gaseous fuel mode angle position), so that the dual fuel engine is operated with the valve lifting curves shown as solid lines in Fig. 4.

Further, at loads below 25% of the full load, shaft 42 is also turned to the second angle position (low load liquid fuel mode angle position), so that the dual fuel engine is also operated with the valve lifting curves shown as solid lines in Fig. 4.

If the operator decides to run the dual fuel engine with diesel, the dual fuel engine has to be transitioned from the gas mode to the appropriate diesel fuel mode, by adjusting the position of shaft 42 as necessary, in accordance with Fig. 3. For example, in case of a transition from the medium load gaseous fuel mode to the high load diesel fuel mode, shaft 42 is rotated from the first position to the second position, and the fuel apportionment is changed to 100% diesel. The knocking combustion, which may occur during the last cycles with gas combustion, may be reduced due to the relatively late diesel fuel main injection timing while shaft 42 is in the first position or moving from the first position to the second position.

It will be appreciated that the adjustment of shaft 42 may be carried out via different adjusting devices, for example, via a hydraulic cylinder, electrically, pneumatically, etc. Further, as mentioned above, control device 100 may have a different configuration, i.e., without shaft 42, adapted to control at least an inlet valve closing timing of inlet valve 62 in a plurality of gaseous fuel modes.

Herein, a large internal combustion engines may be any kind of gas or dual fuel engine having an output range of 500 kW or more. Dual fuel engines as disclosed herein may be suitable for operating on Heavy Fuel Oil (HFO), Marine Diesel Oil (MDO) and Diesel Oil (DO), or any other kind of fuel oils (for example, bio fuels or waste fuels, or oil from other sources).

Although preferred embodiments of this disclosure have been described herein, improvements and modifications may be incorporated without departing from the scope of the appended claims.

## Claims

1. A combustion engine operable in at least a first gaseous fuel mode and a second gaseous fuel mode, comprising:
at least one cylinder (60);
an inlet valve (62) configured to supply the at least one cylinder (60) with intake air:
an outlet valve (64) configured to discharge exhaust from the at least one cylinder (60); and
a control device (100) configured to adjust at least an inlet valve closing timing of the inlet valve (62),
wherein the control device (100) is configured to adjust the inlet valve closing timing to a first inlet valve closing timing in the first gaseous fuel mode, and to a second inlet valve closing timing in the second gaseous fuel mode, the second inlet valve closing timing being earlier than the first inlet valve closing timing,
wherein the first gaseous fuel mode is a medium load gaseous fuel mode, and the second gaseous fuel mode is a high load gaseous fuel mode, and
wherein the control device (100) is configured to switch from the first inlet valve closing timing to the second inlet valve closing timing when an engine load exceeds a predetermined first load threshold of between 50% and 99%, for example, between 70% and 90%, in particular, 80%, of the full engine load.

2. The combustion engine of claim 1, wherein at least the second inlet valve closing timing is a Miller timing.

3. The combustion engine of any one of claims 1 to 2, further operable in a third gaseous fuel mode, wherein
the control device (100) is configured to adjust the inlet valve closing timing to a third inlet valve closing timing in the third gaseous fuel mode, the third inlet valve closing timing being earlier than the first inlet valve closing timing.

4. The combustion engine of claim 3, wherein the third inlet valve closing timing is the same as the second inlet valve closing timing.

5. The combustion engine of claim 3 or 4, wherein the third gaseous fuel mode is a low load gaseous fuel mode.

6. The combustion engine of claim 5, wherein the control device (100) is configured to switch from the first inlet valve closing timing to the third inlet valve closing timing when an engine load falls below a predetermined second load threshold.

7. The combustion engine of claim 6, wherein the predetermined second load threshold is between 1% and 30%, for example, between 20% and 30%, in particular, 20%, of the full engine load.

8. The combustion engine of any one of claims 1 to 7, wherein the control device (100) includes:
a shaft (42) rotationally supported, the shaft (42) being provided with a first eccentric (36) and a second eccentric (38), the first eccentric (36) being configured to support an inlet valve operating lever (26) for controlling the inlet valve (62), the second eccentric (38) being configured to support an outlet valve operating lever (30) for controlling the outlet valve (64); and
an adjusting device (50) configured to adjust the rotational angle of the shaft (42) to at least a first angle position and a second angle position different from the first angle position, the first angle position being associated with the first gaseous fuel mode and the second angle position being associated with the second gaseous fuel mode,
the first eccentric (36) being designed and arranged on the shaft (42) such that, in the first angle position, the associated inlet valve closes at the first inlet valve closing timing and, in the second angle position, the associated inlet valve closes at the second inlet valve closing timing earlier than the first inlet valve closing timing,
the second eccentric (38) being designed and arranged on the shaft (42) such that, in the first angle position, the associated outlet valve opens at a first outlet valve opening timing and, in the second angle position, the associated outlet valve opens at a second outlet valve opening timing later than the first outlet valve opening timing.

9. The combustion engine of any one of claims 1 to 8, further operable in a low load liquid fuel mode and a high load liquid fuel mode, wherein the control device (100) is configured to adjust the inlet valve closing timing to the first inlet valve closing timing in the low load liquid fuel mode, and to the second inlet valve closing timing in the high load liquid fuel mode.

10. A method of operating a gaseous fuel combustion engine comprising at least one cylinder (60) having an inlet valve (62) configured to supply the at least one cylinder (60) with intake air and an outlet valve (64) configured to discharge exhaust from the at least one cylinder (60), the method comprising:
operating the combustion engine in a first gaseous fuel mode with a first inlet valve closing timing;
switching from the first inlet valve closing timing to a second inlet valve closing timing earlier than the first inlet valve closing timing; and
operating the combustion engine in a second gaseous fuel mode with the second inlet valve closing timing,
wherein the first gaseous fuel mode is a medium load gaseous fuel mode, and the second gaseous fuel mode is a high load gaseous fuel mode, the method further comprising:
switching from the first inlet valve closing timing to the second inlet valve closing timing when an engine load exceeds a predetermined first load threshold of between 50% and 99%, for example, between 70% and 90%, in particular, 80%, of the full engine load.

11. The method of claim 10, further comprising:
switching from the first inlet valve closing timing to the second inlet valve closing timing when the engine load falls below a predetermined second load threshold.

## Patentansprüche

1. Brennkraftmaschine, die in mindestens einem ersten gasförmigen Kraftstoffmodus und einem zweiten gasförmigen Kraftstoffmodus betrieben werden kann, umfassend:
mindestens einen Zylinder (60);
ein Einlassventil (62), das zum Versorgen des mindestens einen Zylinders (60) mit Ansaugluft konfiguriert ist;
ein Auslassventil (64), das zum Abgeben von Abgas aus dem mindestens einen Zylinder (60) konfiguriert ist; und
eine Steuervorrichtung (100), die zum Einstellen mindestens eines Einlassventil-Schließzeitpunktes des Einlassventils (62) konfiguriert ist,
wobei die Steuervorrichtung (100) zum Einstellen des Einlassventil-Schließzeitpunkts auf einen ersten Einlassventil-Schließzeitpunkt in dem ersten gasförmigen Kraftstoffmodus und auf einen zweiten Einlassventil-Schließzeitpunkt in dem zweiten gasförmigen Kraftstoffmodus konfiguriert ist, wobei der zweite Einlassventil-Schließzeitpunkt früher als der erste Einlassventil-Schließzeitpunkt ist,
wobei der erste gasförmige Kraftstoffmodus ein gasförmiger Kraftstoffmodus mit mittlerer Last ist und der zweite gasförmige Kraftstoffmodus ein gasförmiger Kraftstoffmodus mit hoher Last ist, und
wobei die Steuervorrichtung (100) zum Schalten von dem ersten Einlassventil-Schließzeitpunkt zu dem zweiten Einlassventil-Schließzeitpunkt konfiguriert ist, wenn eine Motorlast eine vorbestimmte erste Lastschwelle zwischen 50% und 99%, z. B. zwischen 70% und 90%, insbesondere 80%, der vollen Motorlast überschreitet.

2. Brennkraftmaschine nach Anspruch 1, wobei mindestens der zweite Einlassventil-Schließzeitpunkt ein Miller-Zeitpunkt ist.

3. Brennkraftmaschine nach einem der Ansprüche 1 bis 2, die ferner in einem dritten gasförmigen Kraftstoffmodus betrieben werden kann, wobei
die Steuervorrichtung (100) zum Einstellen des Einlassventil-Schließzeitpunkts auf einen dritten Einlassventil-Schließzeitpunkt in dem dritten gasförmigen Kraftstoffmodus konfiguriert ist, wobei der dritte Einlassventil-Schließzeitpunkt früher als der erste Einlassventil-Schließzeitpunkt ist.

4. Brennkraftmaschine nach Anspruch 3, wobei der dritte Einlassventil-Schließzeitpunkt derselbe wie der zweite Einlassventil-Schließzeitpunkt ist.

5. Brennkraftmaschine nach Anspruch 3 oder 4, wobei der dritte gasförmige Kraftstoffmodus ein gasförmiger Kraftstoffmodus mit niedriger Last ist.

6. Brennkraftmaschine nach Anspruch 5, wobei die Steuervorrichtung (100) zum Schalten von dem ersten Einlassventil-Schließzeitpunkt zum dritten Einlassventil-Schließzeitpunkt konfiguriert ist, wenn eine Motorlast unter eine vorbestimmte zweite Lastschwelle fällt.

7. Verbrennungsmotor nach Anspruch 6, wobei die vorbestimmte zweite Lastschwelle zwischen 1% und 30%, z. B. zwischen 20% und 30%, insbesondere 20%, der vollen Motorlast beträgt.

8. Brennkraftmaschine nach einem der Ansprüche 1 bis 7, wobei die Steuervorrichtung (100) aufweist:
eine drehbar gelagerte Welle (42), wobei die Welle (42) mit einem ersten Exzenter (36) und einem zweiten Exzenter (38) bereitgestellt ist, wobei der erste Exzenter (36) zum Lagern eines Einlassventil-Betätigungshebels (26) zum Steuern des Einlassventils (62) konfiguriert ist, wobei der zweite Exzenter (38) zum Lagern eines Auslassventil-Betätigungshebels (30) zum Steuern des Auslassventils (64) konfiguriert ist; und
eine Einstellvorrichtung (50), die zum Einstellen des Drehwinkels der Welle (42) auf mindestens eine erste Winkelposition und eine zweite Winkelposition, die anders als die erste Winkelposition ist, konfiguriert ist, wobei die erste Winkelposition dem ersten gasförmigen Kraftstoffmodus zugeordnet ist und die zweite Winkelposition dem zweiten gasförmigen Brennstoffmodus zugeordnet ist,
wobei der erste Exzenter (36) derart auf der Welle (42) ausgestaltet und angeordnet ist, dass in der ersten Winkelposition das zugeordnete Einlassventil an dem ersten Einlassventil-Schließzeitpunkt schließt, und in der zweiten Winkelposition das zugeordnete Einlassventil an dem zweiten Einlassventil-Schließzeitpunkt schließt, der früher als der erste Einlassventil-Schließzeitpunkt ist,
wobei der zweite Exzenter (38) derart auf der Welle (42) ausgestaltet und angeordnet ist, dass in der ersten Winkelposition das zugeordnete Auslassventil an einem ersten Auslassventil-Öffnungszeitpunkt öffnet, und in der zweiten Winkelposition das zugeordnete Auslassventil an einem zweiten Auslassventil-Öffnungszeitpunkt öffnet, der später als der erste Auslassventil-Öffnungszeitpunkt ist.

9. Brennkraftmaschine nach einem der Ansprüche 1 bis 8, die ferner in einem Niederlast-Flüssigkraftstoffmodus und einem Hochlast-Flüssigkraftstoffmodus betrieben werden kann, wobei die Steuervorrichtung (100) zum Einstellen des Einlassventil-Schließzeitpunkts auf den ersten Einlassventil-Schließzeitpunkt in dem Niederlast-Flüssigkraftstoffmodus und auf den zweiten Einlassventil-Schließzeitpunkt in dem Hochlast-Flüssigkraftstoffmodus konfiguriert ist.

10. Verfahren zum Betreiben einer Brennkraftmaschine für gasförmigen Kraftstoff, umfassend mindestens einen Zylinder (60) mit einem Einlassventil (62), das zum Versorgen des mindestens einen Zylinders (60) mit Ansaugluft konfiguriert ist, und einem Auslassventil (64), das zum Abgeben von Abgas aus dem mindestens einen Zylinder (60) konfiguriert ist, wobei das Verfahren umfasst:
Betreiben der Brennkraftmaschine in einem ersten gasförmigen Kraftstoffmodus mit einem ersten Einlassventil-Schließzeitpunkt;
Schalten von dem ersten Einlassventil-Schließzeitpunkt zu einem zweiten Einlassventil-Schließzeitpunkt, der früher als der erste Einlassventil-Schließzeitpunkt ist; und
Betreiben der Brennkraftmaschine in einem zweiten gasförmigen Kraftstoffmodus mit dem zweiten Einlassventil-Schließzeitpunkt,
wobei der erste gasförmige Kraftstoffmodus ein gasförmiger Kraftstoffmodus mit mittlerer Last und der zweite gasförmige Kraftstoffmodus ein gasförmiger Kraftstoffmodus mit hoher Last ist, wobei das Verfahren weiter umfasst:
Schalten von dem ersten Einlassventil-Schließzeitpunkt zu dem zweiten Einlassventil-Schließzeitpunkt, wenn eine Motorlast eine vorbestimmte erste Lastschwelle zwischen 50% und 99%, z. B. zwischen 70% und 90%, insbesondere 80%, der vollen Motorlast überschreitet.

11. Verfahren nach Anspruch 10, ferner umfassend:
Schalten von dem ersten Einlassventil-Schließzeitpunkt zum zweiten Einlassventil-Schließzeitpunkt, wenn die Motorlast unter eine vorbestimmte zweite Lastschwelle fällt.

## Revendications

1. Moteur à combustion qui peut fonctionner dans au moins un premier mode à combustible gazeux et dans un deuxième mode à combustible gazeux, comprenant :
au moins un cylindre (60) ;
une soupape d'entrée (62) configurée pour alimenter l'au moins un cylindre (60) en air d'admission :
une soupape de sortie (64) configurée pour décharger l'échappement de l'au moins un cylindre (60) ; et
un dispositif de commande (100) configuré pour ajuster au moins une synchronisation de fermeture de la soupape d'entrée de la soupape d'entrée (62),
dans lequel le dispositif de commande (100) est configuré pour ajuster la synchronisation de fermeture de la soupape d'entrée à une première synchronisation de fermeture de la soupape d'entrée dans le premier mode à combustible gazeux, et à une deuxième synchronisation de fermeture de la soupape d'entrée dans le deuxième mode à combustible gazeux, la deuxième synchronisation de fermeture de la soupape d'entrée se faisant plus tôt que la première synchronisation de fermeture de la soupape d'entrée,
dans lequel le premier mode à combustible gazeux est un mode à combustible gazeux de charge moyenne, et le deuxième mode à combustible gazeux est un mode à combustible gazeux à haute charge, et
dans lequel le dispositif de commande (100) est configuré pour passer de la première synchronisation de fermeture de la soupape d'entrée à la deuxième synchronisation de fermeture de la soupape d'entrée lorsqu'une charge du moteur dépasse un premier seuil de charge prédéterminé entre 50 % et 99 %, par exemple, entre 70 % et 90 %, en particulier à 80 %, de la pleine charge du moteur.

2. Moteur à combustion selon la revendication 1, dans lequel au moins la deuxième synchronisation de fermeture de la soupape d'entrée est une synchronisation de Miller.

3. Moteur à combustion selon l'une quelconque des revendications 1 à 2, pouvant fonctionner en outre dans un troisième mode à combustible gazeux, dans lequel
le dispositif de commande (100) est configuré pour ajuster la synchronisation de fermeture de la soupape d'entrée à une troisième synchronisation de fermeture de la soupape d'entrée dans le troisième mode à combustible gazeux, la troisième synchronisation de fermeture de la soupape d'entrée se faisant plus tôt que la première synchronisation de fermeture de la soupape d'entrée.

4. Moteur à combustion selon la revendication 3, dans lequel la troisième synchronisation de fermeture de la soupape d'entrée est la même que la deuxième synchronisation de fermeture de la soupape d'entrée.

5. Moteur à combustion selon la revendication 3 ou 4, dans lequel le troisième mode à combustible gazeux est un mode à combustible gazeux à faible charge.

6. Moteur à combustion selon la revendication 5, dans lequel le dispositif de commande (100) est configuré pour passer de la première synchronisation de fermeture de la soupape d'entrée à la troisième synchronisation de fermeture de la soupape d'entrée lorsqu'une charge du moteur tombe en dessous d'un second seuil de charge prédéterminé.

7. Moteur à combustion selon la revendication 6, dans lequel le second seuil de charge prédéterminé se situe entre 1 % et 30 %, par exemple, entre 20 % et 30 %, en particulier à 20 %, de la pleine charge du moteur.

8. Moteur à combustion selon l'une quelconque des revendications 1 à 7, dans lequel le dispositif de commande (100) inclut :
un arbre (42) supporté à rotation, l'arbre (42) étant pourvu d'une première excentrique (36) et d'une seconde excentrique (38), la première excentrique (36) étant configurée pour supporter un levier d'actionnement de soupape d'entrée (26) pour commander la soupape d'entrée (62), la seconde excentrique (38) étant configurée pour supporter un levier d'actionnement de soupape de sortie (30) pour commander la soupape de sortie (64) ; et
un dispositif d'ajustement (50) configuré pour ajuster l'angle de rotation de l'arbre (42) à au moins une première position angulaire et une seconde position angulaire différente de la première position angulaire, la première position angulaire étant associée au premier mode à combustible gazeux et la seconde position angulaire étant associée au deuxième mode à combustible gazeux,
la première excentrique (36) étant conçue et agencée sur l'arbre (42) de sorte que, dans la première position angulaire, la soupape d'entrée associée se ferme à la première synchronisation de fermeture de la soupape d'entrée et que, dans la seconde position angulaire, la soupape d'entrée associée se ferme à la deuxième synchronisation de fermeture de la soupape d'entrée plus tôt qu'à la première synchronisation de fermeture de la soupape d'entrée,
la seconde excentrique (38) étant conçue et agencée sur l'arbre (42) de sorte que, dans la première position angulaire, la soupape de sortie associée s'ouvre à une première synchronisation d'ouverture de la soupape de sortie et que, dans la seconde position angulaire, la soupape de sortie associée s'ouvre à une deuxième synchronisation d'ouverture de la soupape de sortie plus tard que la première synchronisation d'ouverture de la soupape de sortie.

9. Moteur à combustion selon l'une quelconque des revendications 1 à 8, qui peut en outre fonctionner dans un mode à combustible liquide à faible charge et dans un mode à combustible liquide à haute charge, dans lequel le dispositif de commande (100) est configuré pour ajuster la synchronisation de fermeture de la soupape d'entrée à la première synchronisation de fermeture de la soupape d'entrée dans le mode à combustible liquide à faible charge, et à la deuxième synchronisation de fermeture de la soupape d'entrée dans le mode à combustible liquide à haute charge.

10. Procédé de fonctionnement d'un moteur à combustion à combustible gazeux comprenant au moins un cylindre (60) ayant une soupape d'entrée (62) configurée pour alimenter l'au moins un cylindre (60) en air d'admission et une soupape de sortie (64) configurée pour décharger l'échappement de l'au moins un cylindre (60), le procédé comprenant :
le fonctionnement du moteur à combustion dans un premier mode à combustible gazeux avec une première synchronisation de fermeture de la soupape d'entrée ;
le passage de la première synchronisation de fermeture de la soupape d'entrée à une deuxième synchronisation de fermeture de la soupape d'entrée plus tôt que la première synchronisation de fermeture de la soupape d'entrée ; et
le fonctionnement du moteur à combustion dans un deuxième mode à combustible gazeux avec la deuxième synchronisation de fermeture de la soupape d'entrée,
dans lequel le premier mode à combustible gazeux est un mode à combustible gazeux à charge moyenne, et le deuxième mode à combustible gazeux est un mode à combustible gazeux à haute charge, le procédé comprenant en outre :
le passage de la première synchronisation de fermeture de la soupape d'entrée à la deuxième synchronisation de fermeture de la soupape d'entrée lorsqu'une charge du moteur dépasse un premier seuil de charge prédéterminé entre 50 % et 99 %, par exemple entre 70 % et 90 %, en particulier à 80 %, de la pleine charge du moteur.

11. Procédé selon la revendication 10, comprenant en outre :
le passage de la première synchronisation de fermeture de la soupape d'entrée à la deuxième synchronisation de fermeture de la soupape d'entrée lorsque le charge du moteur tombe en dessous d'un second seuil de charge prédéterminé.
